# EUROPÄISCHE PATENTSCHRIFT

(11) **EP 0 432 087 B1**
(45) Veröffentlichungstag und Bekanntmachung des Hinweises auf die Patenterteilung: **07.09.1994**
(21) Anmeldenummer: 90810808.7
(22) Anmeldetag: 23.10.1990
(51) Int. Cl.: C04B 26/16, E21D 20/02

(54) **2-Kammerpatrone**
2-chambered cartridge
Cartouche à deux compartiments

(30) Priorität: 06.12.1989 DE 3940309
(43) Veröffentlichungstag der Anmeldung: 12.06.1991
(73) Patentinhaber: HILTI Aktiengesellschaft, 9494 Schaan (LI)
(72) Erfinder: Herdlicka, Alwin, W-8900 Augsburg (DE); Gebauer, Ludwig, W-8037 Olching 2 (DE); Grundmann, Gabriele, W-8910 Landsberg (DE)
(74) Vertreter: Wildi, Roland

(56) Entgegenhaltungen:
- EP-A- 0 002 129
- EP-A- 0 085 829
- EP-A- 0 315 876
- FR-A- 2 095 629
- FR-A- 2 379 574

## Beschreibung

Es ist bekannt, Mörtelmassen mit einem Gehalt an härtbaren, ungesättigten Polyestern, Epoxyacrylaten, Urethan-bildenden Isocyanaten und/oder Epoxiden für die spreizdruckfreie Befestigung von Ankerstangen in Bohrlöchern zu verwenden. Zu diesem Zweck werden die Massen zusammen mit dem Härter in das Bohrloch eingebracht. Hierzu können auch Massen mittels Kartusche, Auspressgerät und Statikmischer in ein Bohrloch gemischt und dosiert appliziert werden. Es ist auch möglich, den härtbaren Bestandteil und den Härter, wie Isocyanat und Hydroxylverbindung, also die jeweiligen Ausgangskomponenten, in zwei Kammern einer Patrone getrennt zu konfektionieren (EP 0 085 829 B1). Durch drehendes Einbringen des Ankers in das die Patrone enthaltende Bohrloch werden die Kammern zerstört und die beiden Komponenten vermischt.

Das Festigkeitsniveau der schliesslich erzielten Befestigung ist vor allem abhängig vom Bindemittelsystem.

Ungesättigte Polyesterharzsysteme auf Basis von o- und/oder iso-Phthalsäure, Malein- bzw. Fumarsäure als Dicarbonsäure und Dialkoholen, weisen bei den gestiegenen Anforderungen bei Befestigungen gewisse Schwächen auf. Die bisherigen Grenzen der Systeme sind die Wärmeformbeständigkeit, die Alterungsbeständigkeit - insbesondere bei Einfluss von Feuchtigkeit, Temperaturwechseln und Alkalität - starker Schrumpf, mangelhafte Adhäsion und die Inhibierung der Oberflächenaushärtung durch Sauerstoff. Die Epoxyacrylate, Kondensate aus Methacrylsäure und/oder Acrylsäure mit Epoxidverbindungen auf Basis von Bisphenol-A, Bisphenol-F oder Novolaken, besitzen eine höhere Beständigkeit gegen Klimaeinflüsse sowie vor allem gegen Alkalität und verbesserte Adhäsionseigenschaften gegenüber den ungesättigten Polyesterharzen, aber eine geringere dreidimensionale Vernetzung. Schrumpf und Inhibierung der Oberflächenhärtung durch Sauerstoff sind vergleichbar mit denen der ungesättigten Polyesterharze. Polyurethane besitzen sehr gute Adhäsionseigenschaften, aber sofern sie ausreichende Topfzeit aufweisen, eine wesentlich längere Aushärtungszeit als die radikalisch härtenden Polyesterharze und Epoxyacrylate. Sie reagieren empfindlich mit Nebenreaktionen in Gegenwart von Feuchtigkeit aufgrund der Konkurrenzreaktion mit Wasser, wodurch Störungen im Gefüge (Schaumstruktur) entstehen, die den Verbund schwächen. Epoxidharze schliesslich besitzen ebenfalls eine sehr lange Aushärtungszeit und können nicht bei Temperaturen unter +5° C eingesetzt werden. Ihre Härtungssysteme für niedrige Temperaturen sind feuchtigkeitsempfindlich. Ihre Adhäsionseigenschaften sind bei Raumtemperatur sehr gut.

Aufgabe der vorliegenden Erfindung ist die Befestigung von Verankerungen in Bohrlöchern zu bewirken, wobei die Befestigungen frei sind von den Nachteilen der bekannten Mörtelmassen und dennoch Befestigungen hervorragender Beständigkeit und Festigkeit liefern.

Die Lösung dieser Aufgabe gelingt mit in Bohrlöcher einführbare Zwei-Kammer-Patronen, in denen härtbare Mörtelmassen und Härter getrennt angeordnet sind zur Befestigung von Ankerstangen in Bohrlöchern, wobei die härtbaren Mörtelmassen radikalisch härtbare Vinylesterurethane enthalten und als Härter organische Peroxide enthalten sind.

Vinylesterurethane, häufig auch als Vinylesterurethanharze bezeichnet, sind flüssige bzw. in Lösungsmitteln wie Reaktivverdünnern, lösliche, lineare oder verzweigte Polyurethane, die Acrylat- und/oder Methacrylatgruppen enthalten. Verbindungen dieses Typs und deren Herstellung sind bekannt (vgl. zB DE-OS 35 36 246, EP 0 123 081 und EP 0 002 129 und die darin herangezogene Literatur). Vinylesterurethanharze können durch radikalische Polymerisation bzw. Copolymerisation mit dem (den) Reaktivverdünner(n) vernetzt bzw. ausgehärtet werden.

Die Vinylesterurethanharze können zB dargestellt werden durch Umsetzung von di- und/oder höherfunktionellen Isocyanaten mit geeigneten Acrylverbindungen, gegebenenfalls unter Mitverwendung von Hydroxylverbindungen, die mindestens zwei Hydroxylgruppen enthalten.

Als Isocyanate können aliphatische (cyclische oder lineare) und/oder aromatische di- oder höherfunktionelle Isocyanate bzw Präpolymere verwendet werden. Die Verwendung solcher Verbindungen dient der Erhöhung der Benetzungsfähigkeit und damit der Verbesserung der Adhäsionseigenschaften. Besonders bevorzugt sind Toluylendiisocyanat (TDI), Diisocyanatodiphenylmethan (MDI) zur Erhöhung der Kettenversteifung und Hexandiisocyanat (HDI) und Isophorondiisocyanat (IPDI), welche die Flexibilität verbessern.

Als Acrylverbindungen sind Acrylsäure und am Kohlenwasserstoffrest substiuierte Acrylsäuren wie Methacrylsäure, hydroxylgruppenhaltige Ester der Acryl- bzw Methacrylsäure mit mehrwertigen Alkoholen, zB Pentaerythrittiracrylat, Glyceroldiacrylat, Trimethylolpropandiacrylat, Neopentylglycolmonoacrylat geeignet. Bevorzugt sind Acryl- bzw. Methacrylsäurehydroxylalkylester, zB Hydroxyethylacrylat, Hydroxypropylacrylat, Polyoxyethylenacrylat, Polyoxypropylenacrylat, zumal solche Verbindungen der sterischen Hinderung der Verseifungsreaktion dienen.

Als gegebenenfalls einsetzbare Hydroxylverbindungen sind geeignet zwei- oder höherwertige Alkohole, zB Folgeprodukte des Ethylen- bzw Propylenoxids, wie Ethandiol, Di- bzw Triethylenglycol, Propandiol, Dipropylenglycol, andere Diole, wie 1,4-Butandiol, 1,6-Hexandiol, Neopentylglycol, Diethanolamin, weiter Bisphenol-A bzw -F bzw deren Oxethylierungs und/oder Hydrierungs- bzw Halogenierungsprodukte, höherwertige Alkohole, wie zB Glycerin, Trimethylolpropan, Hexantriol und Pentaerythrit, hydroxylgruppenhaltige Polyether, zB Oligomere aliphatischer oder aromatischer Oxirane und/oder höherer cyclischer Ether, zB Ethylenoxid, Propylenoxid, Styroloxid und Furan, Polyether, die in der Hauptkette aromatische Struktureinheiten enthalten, zB die des Bisphenol A bzw F, hydroxylgruppenhaltige Polyester auf Basis der obengenannten Alkohole bzw Polyether und Dicarbonsäuren bzw ihrer Anhydride, zB Adipinsäure, Säure, Phthalsäure, Tetra- bzw Hexahydrophthalsäure, Hetsäure, Maleinsäure, Fumarsäure, Itaconsäure, Sebacinsäure und dergleichen. Besonders bevorzugt sind Hydroxylverbindungen mit aromatischen Struktureinheiten zur Kettenversteifung bzw WFB-Erhöhung des Harzes, Hydroxylverbindungen, die ungesättigte Struktureinheiten enthalten, wie Fumarsäure, zur Erhöhung der Vernetzungsdichte, verzweigte bzw sternförmige Hydroxylverbindungen, insbesondere drei- bzw höherwertige Alkohole und/oder Polyether bzw Polyester, die deren Struktureinheiten enthalten, verzweigte bzw sternförmige Urethanacrylate zur Erzielung niedrigerer Viskosität der Harze bzw ihrer Lösungen in Reaktivverdünnern und höherer Reaktivität und Vernetzungsdichte.

Neben bzw anstatt der Homopolymerisation können die Vinylesterurethanharze auch mit in den Mörtelmassen enthaltenen Reaktivverdünnern reagieren. Als Reaktivverdünner können alle hierfür geeigneten olefinisch ungesättigten Verbindungen, insbesondere vinylgruppen- einschliesslich acrylgruppenhaltige Verbindungen, beispielsweise Monostyrol, Divinylbenzol, Methacrylsäuremethylester, Methacrylsäure-i-propylester, Methacrylsäure-i-butylester, Hexandioldiacrylat, Tetraethylenglykoldiacrylat, Trimethylolpropantriacrylat und dergleichen mehr eingesetzt werden.

Die Harze bzw Harzlösungen können vorbeschleunigt sein mit Beschleunigern, wie sie für kalthärtende UP-Harze üblich sind. Solche Beschleuniger sind zB tertiäre aromatische Amine, wie Dimethylanilin, Diethylanilin, Dimethyl-p-Toluidin, Schwermetallsalze, zB Carbonsäuresalze von Uebergangsmetallen, wie Kobaltoctoat, Kobaltnaphtenat oder organische Vanadiumsalze. Auch Kombinationen der genannten Beschleuniger sind vorteilhaft, zB die gleichzeitige Verwendung von Kobalt- und Aminbeschleuniger. Die Beschleuniger werden entweder in reiner Form oder als 1 bis 10 %-ige Lösungen in Styrol, anderen Reaktivverdünnern oder Weichmachern, zB Phthalsäure- oder Sebacinsäureestern, den Harzlösungen zugesetzt. Die Konzentration an reinen Beschleunigern betragen 0,03 bis 0,5 Gew.-%, bezogen auf die Harzlösung.

Zur Härtung werden die Vinylesterurethan-haltigen Mörtelmassen mit radikalischen Härtungsmitteln versetzt und innig vermischt. Dies kann durch Zerstören von 2-Kammerpatronen erfolgen. Als Härterkomponenten fungieren organische Peroxide, wie Diacylperoxide, zB Dibenzoylperoxid und Bis(4-chlorbenzoyl)peroxid, Ketonperoxide, zB Methylethylketonperoxid und Cyclohexanonperoxid, sowie Alkylperester, zB t-Butyl-perbenzoat. Die Initiatoren können in reiner Form, zB TBPB, oder phlegmatisiert, zB mit Gips, Kreide, pyrogener Kieselsäure, Phthalat, Chlorparaffin, Wasser, als Pulver, Emulsion oder Paste eingesetzt werden. In einsatzfähigem Zustand enthalten die Mörtelmassen den Härter meist in einer Menge von 0,2 bis 5, vorzugsweise 0,5 bis 4 Gew.-%, bezogen auf die Gesamtmasse.

Als weiteren Bestandteil können die Mörtelmassen Füllstoffe enthalten. Als Füllstoffe dienen zB Quarz, Glas, Korund, Porzellan, Steingut, Aluminiumhydroxid, Schwerspat, Kreide, Polymere, die in Form von Sanden, Mehlen oder speziellen Formkörpern (Zylindern, Kugeln, Plättchen) entweder der Harzlösung und/oder dem Härter (Initiator) zugemischt sein können.

Bei der Konfektionierung als Patrone kann das Wandmaterial der Patrone nach dem Setz- und Mischvorgang ebenso als Füllstoffanteil betrachtet werden.

Die Mörtel haben, bezogen auf die Gesamtmasse, vorzugsweise etwa folgende Zusammensetzung in Gewichtsprozenten:
a) Vinylesterurethanharz 9 bis 65, vorzugsweise 16 bis 32
   Reaktivverdünner 0 bis 30, vorzugsweise 8 bis 22
   Beschleuniger 0 bis 1,5, vorzugsweise 0,01 bis 1
   Phlegmatisierungsmittel (Weichmacher) 0 bis 10, vorzugsweise 0,5 bis 7
   Mineralische Füllstoffe 15 bis 85, vorzugsweise 45 bis 65
   Thixotropiermittel 0 bis 5, vorzugsweise 0,5 bis 4
b) Organische Peroxide 0,2 bis 5, vorzugsweise 0,5 bis 4

Als besonders geeignet haben sich Mischungen erwiesen, welche, neben sonstigen Bestandteilen die nachfolgenden 3 Bestandteile in folgenden Anteilen, bezogen auf die Gesamtmasse, enthalten:

| | |
|---|---|
| Vinylesterurethanharz | 9 - 28 Gew.-% |
| Reaktivverdünner | 4 - 16 Gew.-% |
| Füllstoffe | 56 - 82 Gew.-% |

### Ausführungsbeispiele:

### Beispiel 1 Dimension M12

| **a) Aussenpatrone** | | |
|---|---|---|
| Glasgewicht | | 5,6 g |
| Glasaussendurchmesser | 10,75 mm | |
| Glaswandstärke | 0,55 mm | |
| Patronenlänge | 100 mm | |
| Vinylesterurethanharz auf Basis Bisphenol-A, Methacrylsäure und Diisocyanatodiphenylmethan (65 %-ig in Monostyrol) vorbeschleunigt mit Amin | | 4,3 g |
| Quarz (Korngrösse 1,5 - 2,0 mm) | | 6,6 g |

| **b) Innenpatrone** | | |
|---|---|---|
| Glasgewicht | | 1,2 g |
| Glasaussendurchmesser | 6,3 mm | |
| Glaswandstärke | 0,65 mm | |
| Patronenlänge | 80 mm | |
| Dibenzoylperoxid (20 % in Gips) | | 0,8 g |

### Beispiel 2

| **a) Aussenpatrone** | | |
|---|---|---|
| Glasgewicht | | 5,8 g |
| Glasaussendurchmesser | 10,75 mm | |
| Glaswandstärke | 0,45 mm | |
| Patronenlänge | 110 mm | |
| 40 Gewichtsteile: Vinylesterurethanharz auf Basis Bisphenol-A, Acrylsäure und Diisocyanatodiphenylmethan (55 % in Monostyrol); 5 Gewichtsteile: Divinylbenzol, beschleunigt mit Dimethyl-p-toluidin (0,15 %) | | 3,8 g |

| **b) Innenpatrone** | | |
|---|---|---|
| Glasgewicht | | 2,2 g |
| Glasaussendurchmesser | 9,20 mm | |
| Glaswandstärke | 0,45 mm | |
| Patronenlänge | 90 mm | |
| Quarz (1,2 - 1,8 mm) | | 5,4 g |
| Dibenzoylperoxid (50 %ig in Phthalat) | | 0,8 g |

### Beispiel 3

| **a) Aussenpatrone** | | |
|---|---|---|
| Glasgewicht | | 5,8 g |
| Glasaussendurchmesser | 10,75 mm | |
| Glaswandstärke | 0,45 mm | |
| Patronenlänge | 110 mm | |
| Vinylesterurethanharz auf Basis Bisphenol-A, Methacrylsäure und Toluylendiisocyanat, 80 %ig in Methacrylsäureester, vorbeschleunigt mit Amin | | 4,2 g |

| **b) Innenpatrone** | | |
|---|---|---|
| Glasgewicht | | 2,2 g |
| Glasaussendurchmesser | 9,20 mm | |
| Glaswandstärke | 0,45 mm | |
| Patronenlänge | 90 mm | |
| Quarz (0,04 - 0,15 mm) | | 0,4 g |
| Quarz (1,2 - 1,8 mm) | | 5,0 g |
| Dibenzoylperoxid (50 %ig in Kreide | | 0,5 g |

### Beispiel 4

| **a) Aussenpatrone** | | |
|---|---|---|
| Glasgewicht | | 5,6 g |
| Glasaussendurchmesser | 10,75 mm | |
| Glaswandstärke | 0,45 mm | |
| Patronenlänge | 100 mm | |
| Vinylesterurethanharz auf Basis Bisphenol-A, Methacrylsäure und Diisocyanatodiphenylmethan (75 % in Monostyrol) | | 3,0 g |
| Vinylesterurethanharz auf Basis Novolak, Methacrylsäure und Diisocyanatodiphenylmethan (60 %ig in Monostyrol) | | 1,2 g |
| Cobaltoctoat | | 0,001g |
| Dimethylanilin | | 0,004g |

| **b) Innenpatrone** | | |
|---|---|---|
| Glasgewicht | | 0,7 g |
| Glasaussendurchmesser | 43 mm | |
| Glaswandstärke | 0,65 mm | |
| Patronenlänge | 80 mm | |
| Methylethylketonperoxid | | 0,35 g |

Beispiele für die chemische und mengenmässige Zusammensetzung:

### Beispiel 5

| a) Mörtel zur Verankerung von Gewindestangen in Vollmauerwerk (Ziegel) | |
|---|---|
| Vinylesterurethanharz auf Basis Novolak, Methacrylsäure und Diisocyanatodiphenylmethan | 20,45 % |
| Monostyrol | 11,50 % |
| Diethylanilin | 0,11 % |
| Chlorparaffin (C10 - C13, 49 % Chlor) | 4,26 % |
| Pyrogene Kieselsäure, organisch nachbehandelt | 1,26 % |
| Kieselerde, 44 ... 200 um (68 % Christobalit, 31 % Kaolinit, mit Distearyldimethylammoniumchlorid nachbehandelt) | 12,69 % |

| b) | |
|---|---|
| Quarzsand 0,1 ... 0,25 mm | 46,80 % |
| Hohlglaskugeln | 1,75 % |
| Dibenzoylperoxid | 1,18 % |
| | 1̅0̅0̅,̅0̅0̅ %̅ |

### Beispiel 6

| a) Vinylesterurethanmörtel zum Befestigen von glatten, epoxybeschichteten Stahlstangen (Smooth Dowel Bars) | |
|---|---|
| Vinylesterurethanharz auf Basis Bisphenol-A, Methacrylsäure und Hexandiisocyanat | 21,29 % |
| Monostyrol | 15,79 % |
| Diethylanilin | 0,18 % |
| Pyrogene Kieselsäure, organisch nachbehandelt | 2,66 % |
| Quarzsand, 50 - 150 µm | 3,66 % |
| Quarzsand, 100 - 250 µm | 48,80 % |

| b) | |
|---|---|
| Paraffin, Fp. 46 - 48°C | 0,18 % |
| Di-2-ethylhexylphthalat | 3,72 % |
| Dibenzoylperoxid | 3,72 % |
| | 1̅0̅0̅,̅0̅0̅ %̅ |

### Beispiel 7

| a) Vinylesterurethanmörtel zum Befestigen von Gewindestangen in Vollmauerwerk (Ziegel) | |
|---|---|
| Vinylesterurethanharz auf Basis Bisphenol-A, Acrylsäure und Toluylendiisocynat | 32,00 % |
| Monostyrol | 13,72 % |
| Diethyolanilin | 0,18 % |
| Chlorparaffin (C10 - C13, 49 % Chlorgehalt) | 1,42 % |
| Pyrogene Kieselsäure, organisch nachbehandelt | 1,16 % |
| Quarzmehl, 0 - 63 µm | 9,17 % |
| Quarzsand, 100 - 250 µm | 35,68 % |

| b) | |
|---|---|
| Hohlglaskugeln | 1,83 % |
| Di-2-ethylhexylphthalat | 2,42 % |
| Dibenzoylperoxid | 2,42 % |
| | 1̅0̅0̅,̅0̅0̅ %̅ |

### Beispiel 8

| a) Vinylesterurethanmörtel zur Befestigung von Gewindestangen und Armierungseisen in Beton und Gestein | |
|---|---|
| Vinylesterurethanharz auf Basis Novolak, Methacrylsäure und Diisocynatodiphenylmethan | 9,85 % |
| Vinylesterurethanharz auf Basis Bisphenol-A, Methycrylsäure und Diisocyanatodiphenylmethan | 7,63 % |
| Monostyrol | 12,10 % |
| Divinylbenzol | 4,04 % |
| Dimethylanilin | 0,04 % |
| Pyrogene Kieselsäure organisch nachbehandelt | 0,62 % |
| Quarzmehl, 0 - 63 µm | 14,04 % |
| Quarzsand, 50 - 150 µm | 15,23 % |
| Quarzsand, 100 - 250 µm | 35,73 % |

| b) | |
|---|---|
| Paraffin Fp 46 - 48°C | 0,12 % |
| Di-2-ethylhexylphthalat | 0,08 % |
| Dibenzoylperoxid | 0,52 % |
| | 1̅0̅0̅,̅0̅0̅ %̅ |

### Beispiel 9

| a) Vinylesterurethanmörtel zum Befestigen von Gewindestangen in Beton und Vollziegel | |
|---|---|
| Vinylesterurethanharz auf Basis Bisphenol-A, Methacrylsäure und Diisocyanatodinhenylmethan | 26,79 % |
| Monostyrol | 21,41 % |
| Diethylanilin | 0,31 % |
| Chlorparaffin (C10 - C13, 49 % Chlor) | 3,01 % |
| Kieselerde, 44 ... 200 um (68 % Christohalit, 31 % Kaolinit, mit Distearyldimethylammoniumchlorid nachbehandelt) | 22,03 % |
| Pyrogene Kieselsäure, organisch nachbehandelt | 0,52 % |

| b) | |
|---|---|
| Hohlglaskugeln | 23,01 % |
| Dibenzoylperoxid | 2,92 % |
| | 1̅0̅0̅,̅0̅0̅ %̅ |

### Beispiel 9

| **a) Aussenpatrone** | | |
|---|---|---|
| Glasgewicht | | 5,6 g |
| Glasaussendurchmesser | 10,75 mm | |
| Glaswandstärke | 0,45 mm | |
| Patronenlänge | 100 mm | |
| Vinylesterurethanharz auf Basis Bisphenol-A, Methacrylsäure und Diisocyanatodiphenylmethan (75 % in Monostyrol) | | 3,0 g |
| Vinylesterurethanharz auf Basis Novolak, Methacrylsäure und Diisocyanatodiphenylmethan (60 %ig in Monostyrol) | | 1,2 g |
| Cobaltoctoat | | 0,001g |
| Dimethylanilin | | 0,004g |

| **b) Innenpatrone** | | |
|---|---|---|
| Glasgewicht | | 0,7 g |
| Glasaussendurchmesser | 43 mm | |
| Glaswandstärke | 0,65 mm | |
| Patronenlänge | 80 mm | |
| Methylethylketonperoxid | | 0,35 g |

## Patentansprüche

1. In Bohrlöcher einführbare 2-Kammerpatronen, in denen härtbare Mörtelmassen und Härter getrennt angeordnet sind zur Befestigung von Ankerstangen in Bohrlöchern, **dadurch gekennzeichnet**, dass die härtbaren Massen radikalisch härtbare Vinylesterurethanharze enthalten und als Härter organische Peroxide enthalten sind.

2. 2-Kammerpatronen gemäss Patentanspruch 1, dadurch gekennzeichnet, dass sie einen Reaktivverdünner enthält.

3. 2-Kammerpatronen gemäss Patentanspruch 1, dadurch gekennzeichnet, dass die Vinylesterurethanharze vorbeschleunigt sind.

4. Verwendung radikalisch härtbarer Vinylesterurethanharze als Mörtelmassen zur Befestigung von Ankerstangen in Bohrlöchern.

## Claims

1. Two-chamber cartridges, which are insertable into boreholes and in which hardening mortar substances and hardeners are separately arranged, for fixing anchor bars in boreholes, **characterised in that** the hardening substances contain radically hardening vinylester urethane resins and peroxides serving as hardeners.

2. Two-chamber cartridges according to claim 1, **characterised in that** it contains a reactive dilutant.

3. Two-chamber cartridges according to claim 1, **characterised in that** the vinylester urethane resins are pre-accelerated.

4. Use of radically hardening vinylester urethane resins as mortar substance for fixing anchor bars in boreholes.

## Revendications

1. Cartouches à deux compartiments pouvant être insérées dans des trous de forage, dans lesquelles sont disposés de façon séparée des compositions de ciments durcissables et des durcisseurs, pour la fixation de tiges d'ancrage dans des trous de forage, caractérisées par le fait que les compositions durcissables contiennent des résines d'ester de vinyle-uréthanne durcissables par voie radicalaire et que les durcisseurs contiennent des peroxydes organiques.

2. Cartouche à deux compartiments selon la revendication 1, caractérisée par le fait qu'elle contient un diluant réactif.

3. Cartouches à deux compartiments selon la revendication 1, caractérisées par le fait que les résines d'ester de vinyle-uréthanne sont préaccélérés.

4. Utilisation de résines d'ester de vinyle-uréthanne durcissables par voie radicalaire comme compositions de ciments pour la fixation de tiges d'ancrage dans des trous de forage.
